# EUROPÄISCHE PATENTSCHRIFT

(11) **EP 4 219 966 B1**
(45) Veröffentlichungstag und Bekanntmachung des Hinweises auf die Patenterteilung: **21.08.2024**
(21) Anmeldenummer: 23157101.9
(22) Anmeldetag: 09.12.2019
(51) Int. Cl.: F16C 17/10, F03D 80/70, F16C 35/02

(54) **VERFAHREN ZUM WECHSELN EINES GLEITLAGERELEMENTES EINER ROTORLAGERUNG EINER WINDKRAFTANLAGE, SOWIE GONDEL FÜR EINE WINDKRAFTANLAGE**
METHOD FOR CHANGING A SLIDING BEARING ELEMENT OF A ROTOR BEARING OF A WIND TURBINE, AND NACELLE FOR A WIND TURBINE
PROCÉDÉ DE CHANGEMENT D'UN ÉLÉMENT DE PALIER LISSE D'UN PALIER DE ROTOR D'UNE ÉOLIENNE ET NACELLE POUR UNE ÉOLIENNE

(30) Priorität: 13.12.2018 AT 511112018
(43) Veröffentlichungstag der Anmeldung: 02.08.2023
(62) Teilanmeldung aus: 19835587.7
(73) Patentinhaber: Miba Gleitlager Austria GmbH, 4663 Laakirchen (AT)
(72) Erfinder: HAGER, Gunther, 4563 Micheldorf (AT); HÖLZL, Johannes Sebastian, 4880 Berg im Attergau (AT)
(74) Vertreter: Burger, Hannes

(56) Entgegenhaltungen:
- EP-A1- 2 568 163
- EP-A1- 2 711 568
- WO-A1-2011/127510
- US-A1- 2015 017 000

## Beschreibung

Die Erfindung betrifft ein Verfahren zum Wechseln eines Gleitlagerelementes einer Rotorlagerung, sowie eine Gondel für eine Windkraftanlage.

Aus dem Stand der Technik ist es bekannt, dass zum Wechseln der Rotorlagerung der Rotor vom Gondelgehäuse abgenommen wird. Dies ist sehr aufwändig und daher zeitintensiv. Da in der Stillstandzeit kein Strom produziert werden kann, soll die Wartung der Windkraftanlage in einem möglichst kurzen Zeitraum erfolgen.

Die WO 2011/127510 A1 offenbart die Merkmale des Oberbegriffs des Anspruches 1.

Aufgabe der vorliegenden Erfindung war es, die Nachteile des Standes der Technik zu überwinden und ein Verfahren zur Verfügung zu stellen, mittels dem der Wechsel der Rotorlagerung möglichst einfach erfolgen kann. Weiters soll eine Gondel für eine Windkraftanlage angegeben werden, bei welcher das Verfahren ausgeführt werden kann.

Diese Aufgabe wird durch eine Vorrichtung und ein Verfahren gemäß den Ansprüchen gelöst.

Erfindungsgemäß ist ein Verfahren zum Wechseln eines Gleitlagerelementes einer Rotorlagerung einer Windkraftanlage vorgesehen. Die Rotorlagerung umfasst ein inneres Ringelement und ein äußeres Ringelement, zwischen welchen das Gleitlagerelement angeordnet ist. Das innere Ringelement und das äußere Ringelement sind relativ zueinander verdrehbar. Eine Rotornabe ist am inneren Ringelement oder am äußeren Ringelement befestigt. Natürlich kann auch vorgesehen sein, dass das inneren Ringelement oder das äußere Ringelement Teil der Rotornabe oder Teil des Gehäuses sind. Das Gleitlagerelement mehrere einzelne Gleitlagerpads umfasst, welche jeweils mittels zumindest einem Befestigungsmittel lösbar am inneren Ringelement oder äußeren Ringelement der Rotorlagerung befestigt sind. Beim Wechseln des Gleitlagerelementes werden die einzelnen Gleitlagerpads nacheinander entfernt und durch neue Gleitlagerpads ersetzt, wobei während dem Wechseln der einzelnen Gleitlagerpads des Gleitlagerelementes das innere Ringelement und das äußere Ringelement nicht demontiert werden.

Das erfindungsgemäße Verfahren bringt den Vorteil mit sich, dass das Wechseln der Gleitlagerelemente und somit die Wartung der Windkraftanlage möglichst einfach und schnell erfolgen kann. Dadurch kann die Windkraftanlage nach nur kurzer Wartungszeit wieder Energie produzieren. Insbesondere die Verwendung von einzelnen Gleitlagerpads bringt den Vorteil mit sich, dass diese einzeln und unabhängig voneinander aus der Windkraftanlage entfernt werden können, um die Wartung unter nicht demontiertem Rotor bzw. Rotornabe durchführen zu können.

Weiters ist vorgesehen, dass im Zuge des Wechselvorganges alle der einzelnen Gleitlagerpads gewechselt werden, wobei zum Wechseln der einzelnen Gleitlagerpads ein jeweils zu wechselndes Gleitlagerpad in eine Gleitlagerpadwechselstellung verbracht wird, in der es nicht belastet ist. Durch Verbringung des zu wechselnden Gleitlagerpads in eine Gleitlagerpadwechselstellung kann dieses aus der Windkraftanlage entfernt werden. Hierzu muss das Befestigungsmittel mittels dem das Gleitlagerpad am inneren Ringelement oder am äußeren Ringelement befestigt ist gelöst werden. Dabei kann das Gewicht der Rotornabe bzw. des Rotors auf den restlichen in der Rotorlagerung verbleibenden Gleitlagerpads verteilt aufgenommen werden.

Ferner ist vorgesehen, dass sowohl das innere Ringelement als auch das äußere Ringelement V-förmig ausgebildet sind und zwischen den beiden Ringelementen axial zueinander beabstandet ein erstes Gleitlagerelement und ein zweites Gleitlagerelement mit jeweils mehreren einzelnen Gleitlagerpads angeordnet sind, wobei die beiden Gleitlagerelemente im Querschnitt gesehen in einem Winkel zueinander angeordnet sind, wobei aufgrund eines Kippmomentes, das auf die Rotornabe wirkt, eines der beiden Gleitlagerelemente an dessen oberster Position und das zweite der beiden Gleitlagerelemente an dessen unterster Position nicht belastet ist, wodurch sich die Gleitlagerpadwechselstellungen ergeben. Besonders bei einem derart aufgebauten Rotorlager kann die auf den Rotor bzw. die Rotornabe wirkende Schwerkraft genutzt werden, um die einzelnen Gleitlagerpads einfach wechseln zu können.

Darüber hinaus kann vorgesehen sein, dass die Rotornabe am inneren Ringelement befestigt ist und dass die Gleitlagerpads der Gleitlagerelemente am inneren Ringelement befestigt sind und dass das von der Rotornabe weiter distanzierte erste Gleitlagerelement an dessen unterster Position nicht belastet ist und dass das der Rotornabe näher liegende zweite Gleitlagerelement an dessen oberster Position nicht belastet ist und dass durch Verdrehung der Rotornabe die einzelnen Gleitlagerpads der Gleitlagerelemente in die Gleitlagerpadwechselstellung verbracht werden. Besonders bei einem derart ausgebildeten Rotorlager ist der Wechselvorgang der einzelnen Gleitlagerpads einfach möglich.

Alternativ dazu kann vorgesehen sein, dass die Rotornabe am äußeren Ringelement befestigt ist und dass die Gleitlagerpads der Gleitlagerelemente am äußeren Ringelement befestigt sind und dass das von der Rotornabe weiter distanzierte erste Gleitlagerelement an dessen oberster Position nicht belastet ist und dass das der Rotornabe näher liegende zweite Gleitlagerelement an dessen unterster Position nicht belastet ist und dass durch Verdrehung der Rotornabe die einzelnen Gleitlagerpads der Gleitlagerelemente in die Gleitlagerpadwechselstellung verbracht werden. Besonders bei einem derart ausgebildeten Rotorlager ist der Wechselvorgang der einzelnen Gleitlagerpads einfach möglich.

Vorteilhaft ist auch eine Ausprägung, gemäß welcher vorgesehen sein kann, dass zu jedem Zeitpunkt beim Wechseln des Gleitlagerelementes zumindest eines der Gleitlagerpads in der Rotorlagerung verbleibt. Dadurch kann die Rotornabe bzw. der Rotor zu jedem Zeitpunkt gestützt werden.

Gemäß einer Weiterbildung ist es möglich, dass das Verfahren folgende Verfahrensschritte umfasst:
- Drehen der Rotornabe relativ zu einem Gondelgehäuse der Gondel, bis eines der Gleitlagerpads an eine Gleitlagerpadwechselstellung gelangt, an der es nicht belastet ist;
- Entfernen jenes Gleitlagerpads , welches sich an der Gleitlagerpadwechselstellung befindet und Einsetzen eines neuen Gleitlagerpads anstatt des entfernten Gleitlagerpads;
- Drehen der Rotornabe relativ zu dem Gondelgehäuse der Gondel, bis ein weiteres der Gleitlagerpads an die Gleitlagerpadwechselstellung gelangt;
- Entfernen jenes Gleitlagerpads, welches sich an der Gleitlagerpadwechselstellung befindet und Einsetzen eines neuen Gleitlagerpads anstatt des entfernten Gleitlagerpads;
- Durchführen der obigen Verfahrensschritte, bis alle der alten Gleitlagerpads durch neue Gleitlagerpads ersetzt sind. Besonders die Abfolge dieser Verfahrensschritte führt zu einem möglichst einfachen Wechsel der Gleitlagerpads.

Ferner kann es zweckmäßig sein, wenn die Rotornabe mittels einer Aufnahmevorrichtung aufgenommen wird und mittels der Aufnahmevorrichtung eine derartige Kraft auf die Rotornabe ausgeübt wird, dass jeweils das zu wechselnde Gleitlagerpad entlastet wird. Mittels der Aufnahmevorrichtung kann die Gewichtskraft des Rotors, insbesondere der Rotornabe und der Rotorblätter aufgenommen werden, wodurch ein Wechsel der Gleitlagerpads vereinfacht werden kann. Insbesondere ist es möglich, die Position der Gleitlagerpadwechselstellung aktiv zu beeinflussen.

Darüber hinaus kann vorgesehen sein, dass die Gleitlagerpads beim Wechseln in einer Wechselrichtung parallel zu ihrer Gleitfläche bewegt werden. Insbesondere kann vorgesehen sein, dass die Gleitlagerpads parallel zu ihrer Gleitfläche aus ihrer Betriebsposition herausgezogen werden. Dies bringt den Vorteil mit sich, dass die beiden Ringelemente zum Ausbau der Gleitlagerpads nicht voneinander entfernt werden müssen, sondern die Gleitlagerpads einfach aus ihrer Position zwischen den beiden Ringelementen herausgezogen werden können. Bei V-förmig ausgebildeten Ringelementen können die Gleitlagerpads in diagonaler Richtung aus ihrer Betriebsposition herausgezogen werden. Bei Gleitlagerelementen, welche als Axiallager ausgebildet sind, können die Gleitlagerpads in radialer Richtung aus ihrer Betriebsstellung herausgezogen werden. Bei Gleitlagerpads, welche als reine Radiallager ausgebildet sind, können die Gleitlagerpads in axialer Richtung aus ihrer Betriebsposition herausgezogen werden.

Weiters kann vorgesehen sein, dass vor dem Entfernen der Gleitlagerpads das in einem Schmierölsumpf befindliche Schmieröl abgelassen wird. Dadurch kann die Zugänglichkeit der Gleitlagerpads an deren gesamten Umfang erreicht werden.

Erfindungsgemäß ist eine Gondel für eine Windkraftanlage vorgesehen. Die Gondel umfasst:
- ein Gondelgehäuse;
- eine Rotornabe;
- eine Rotorlagerung zur Lagerung der Rotornabe am Gondelgehäuse, wobei die Rotorlagerung zumindest ein inneres Ringelement und zumindest ein äußeres Ringelement aufweist, wobei zwischen dem inneren Ringelement und dem äußeren Ringelement zumindest ein Gleitlagerelement ausgebildet ist. Das Gleitlagerelement umfasst mehrere einzelne Gleitlagerpads, welche über den Umfang verteilt angeordnet sind. Die Gleitlagerpads sind jeweils mittels zumindest einem Befestigungsmittel an jenem Ringelement angeordnet, welches relativ zum Gondelgehäuse verdrehbar ausgebildet ist. Das erfindungsgemäße Wechseln der Gleitlager wird bei einem derartigen Aufbau ermöglicht.

Gemäß einer besonderen Ausprägung ist es möglich, dass im Gondelgehäuse eine Gleitlagerpadwechselöffnung angeordnet ist, durch welche die Gleitlagerpads hindurchführbar sind. Dies bringt den Vorteil mit sich, dass die einzelnen Gleitlagerpads einfach gewechselt werden können.

Weiters kann vorgesehen sein, dass in den einzelnen Gleitlagerpads Innengewinde ausgebildet sind, welche mit den Befestigungsmitteln, insbesondere mit Schrauben zusammenwirken.

Alternativ dazu kann vorgesehen sein, dass in den einzelnen Gleitlagerpads Befestigungsinserts, insbesondere Gewindeinserts, aufgenommen sind, welche mit den Befestigungsmitteln, insbesondere mit Schrauben zusammenwirken.

Insbesondere kann vorgesehen sein, dass die Innengewinde bzw. die Befestigungsinserts in Sachlöchern ausgebildet bzw. aufgenommen sind.

Das während dem Wechseln der einzelnen Gleitlagerpads des Gleitlagerelementes das innere Ringelement und das äußere Ringelement nicht demontiert werden bedeutet insbesondere, dass die beiden Ringelemente nicht weiter als 300mm, insbesondere nicht weiter als 100mm, bevorzugt nicht weiter als 5mm aus ihrer Betriebsstellung voneinander entfernt werden. Insbesondere kann jedoch vorgesehen sein, dass das innere Ringelement oder das äußere Ringelement verdreht und/oder geringfügig angehoben bzw. verkippt wird, um die Lagerlast von den einzelnen jeweils zu wechselnden Gleitlagerpads genommen wird. Mit anderen Worten ausgedrückt kann vorgesehen sein, dass während dem Wechselvorgang eine Rotornabe nicht vom Gondelgehäuse der Gondel abgenommen wird.

Eine Gondel im Sinne dieses Dokumentes umfasst neben einem Gondelgehäuse auch eine Rotornabe und eine Rotorlagerung zur Lagerung der Rotornabe.

Das innere Ringelement bzw. das äußere Ringelement können jeweils als eigenständige Bauteile ausgebildet sein, welche mit der Rotornabe oder Rotorwelle bzw. mit dem Gondelgehäuse gekoppelt sein können. Alternativ dazu ist es auch denkbar, dass das innere Ringelement als integraler Bestandteil der Rotornabe bzw. der Rotorwelle ausgebildet ist. Alternativ dazu ist es auch denkbar, dass das äußere Ringelement als integraler Bestandteil der Rotornabe bzw. der Rotorwelle ausgebildet ist. Alternativ dazu ist es auch denkbar, dass das innere Ringelement als integraler Bestandteil des Gondelgehäuses ausgebildet ist. Alternativ dazu ist es auch denkbar, dass das äußere Ringelement als integraler Bestandteil des Gondelgehäuses ausgebildet ist.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer Windkraftanlage;
- Fig. 2: ein Querschnitt einer Gondel in einer stark schematischen Darstellung;
- Fig. 3: eine Schnittansicht gemäß der Schnittlinie III - III aus Fig. 3;
- Fig. 4: eine Detailansicht des Details x aus Fig. 2.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

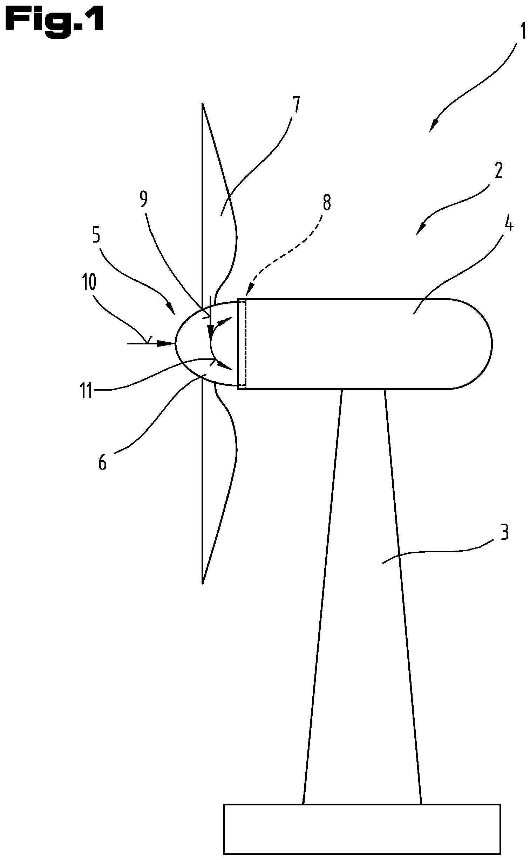

Fig. 1 zeigt eine schematische Darstellung einer Windkraftanlage 1 zum Erzeugen von elektrischer Energie aus Windenergie. Die Windkraftanlage 1 umfasst eine Gondel 2, welche an einem Turm 3 drehbar aufgenommen ist. Die Gondel 2 umfasst ein Gondelgehäuse 4, welches die Hauptstruktur der Gondel 2 bildet. Im Gondelgehäuse 4 der Gondel 2 sind die elektrotechnischen Komponenten wie etwa ein Generator der Windkraftanlage 1 angeordnet.

Weiters ist ein Rotor 5 ausgebildet, welcher eine Rotornabe 6 mit daran angeordneten Rotorblättern 7 aufweist. Die Rotornabe 6 wird als Teil der Gondel 2 gesehen. Die Rotornabe 6 ist mittels einer Rotorlagerung 8 drehbeweglich am Gondelgehäuse 4 aufgenommen.

Die Rotorlagerung 8, welche zur Lagerung der Rotornabe 6 am Gondelgehäuse 4 der Gondel 2 dient, ist zur Aufnahme einer Radialkraft 9, einer Axialkraft 10 und eines Kippmomentes 11 ausgebildet. Die Axialkraft 10 ist bedingt durch die Kraft des Windes. Die Radialkraft 9 ist bedingt durch die Gewichtskraft des Rotors 5 und greift am Schwerpunkt des Rotors 5 an. Da der Schwerpunkt des Rotors 5 außerhalb der Rotorlagerung 8 liegt, wird in der Rotorlagerung 8 durch die Radialkraft 9 das Kippmoment 11 hervorgerufen. Das Kippmoment 11 kann ebenfalls durch eine ungleichmäßige Belastung der Rotorblätter 7 hervorgerufen werden.

Die erfindungsgemäße Rotorlagerung 8 kann beispielsweise einen Durchmesser zwischen 0,5 m und 5 m aufweisen. Natürlich ist es auch denkbar, dass die Rotorlagerung 8 kleiner oder größer ist.

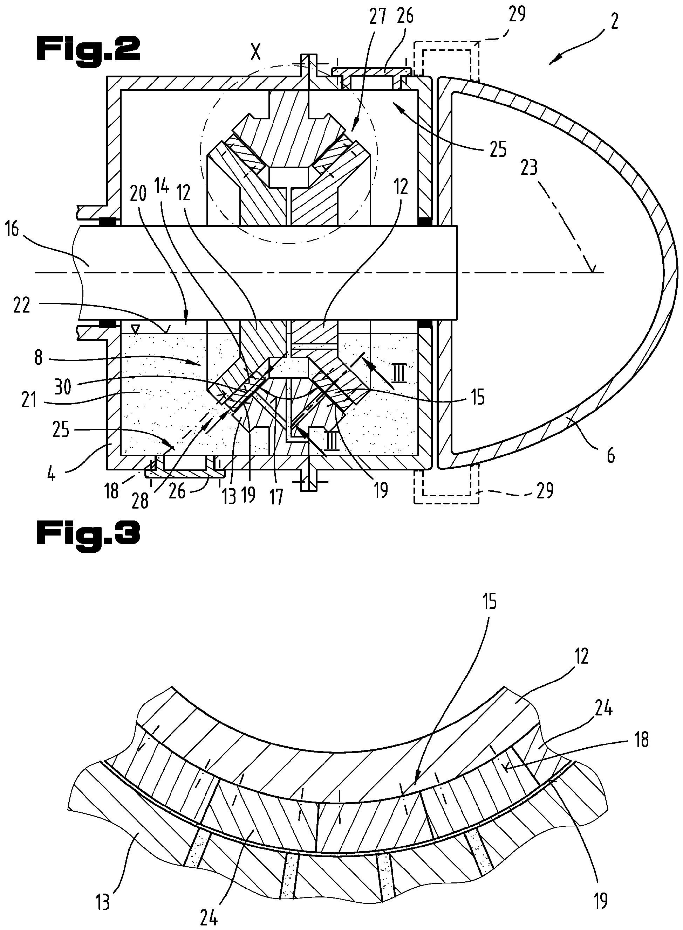

In Fig. 2 ist das Gondelgehäuse 4 und die Rotornabe 6 in einer schematischen Schnittdarstellung dargestellt, wobei der Aufbau, insbesondere in dessen Dimensionierung stark schematisiert wurde. Wie aus Fig. 2 ersichtlich, kann vorgesehen sein, dass die Rotorlagerung 8 zumindest ein inneres Ringelement 12 und zumindest ein äußeres Ringelement 13 aufweist. Zwischen dem inneren Ringelement 12 und dem äußeren Ringelement 13 ist zumindest ein Gleitlagerelement 14, 15 angeordnet. Insbesondere kann vorgesehen sein, dass zwischen dem inneren Ringelement 12 und dem äußeren Ringelement 13 ein erstes Gleitlagerelement 14 und ein zweites Gleitlagerelement 15 angeordnet ist.

Wie aus Fig. 2 ersichtlich, kann vorgesehen sein, dass das innere Ringelement 12 mit der Rotornabe 6 gekoppelt ist. Insbesondere kann vorgesehen sein, dass eine Rotorwelle 16 ausgebildet ist, an welcher die Rotornabe 6 angeordnet ist. Das innere Ringelement 12 kann direkt an der Rotorwelle 16 aufgenommen sein.

In einem weiteren, nicht dargestellten Ausführungsbeispiel kann natürlich auch vorgesehen sein, dass das innere Ringelement 12 direkt an der Rotornabe 6 aufgenommen ist.

In wieder einem weiteren, nicht dargestellten Ausführungsbeispiel kann natürlich auch vorgesehen sein, dass das innere Ringelement 12 am Gondelgehäuse 4 befestigt ist, und dass die Rotornabe 6 mit dem äußeren Ringelement 13 gekoppelt ist.

Wie aus Fig. 2 ersichtlich, kann vorgesehen sein, dass sowohl das innere Ringelement 12 als auch das äußere Ringelement 13 V-förmig ausgebildet sind und jeweils an der V-förmigen Flanke zwischen den beiden Ringelementen 12, 13 axial zueinander beabstandet die zwei Gleitlagerelemente 14, 15 ausgebildet sind.

Insbesondere kann vorgesehen sein, dass die beiden Gleitlagerelemente 14, 15 in einem Winkel 17 zueinander angeordnet sind. Wie aus Fig. 2 ersichtlich, kann in einem Ausführungsbeispiel vorgesehen sein, dass die Gleitlagerelemente 14 mittels Befestigungsmittel 18 am inneren Ringelement 12 befestigt sind. Somit kann zwischen den Gleitlagerelementen 14, 15 und dem äußeren Ringelement 13 eine Gleitfläche 19 ausgebildet sein. Bei einer Anordnung der Gleitlagerelemente 14, 15, wie sie in Fig. 2 dargestellt ist, können die Gleitflächen 19 ebenfalls V-förmig angeordnet sein.

In einer nicht dargestellten Ausführungsvariante kann auch vorgesehen sein, dass das Gleitlagerelement 14, 15 zwischen den beiden Ringelementen 12, 13 als Radiallager und/oder als Axiallager ausgebildet sind.

Wie aus Fig. 2 ebenfalls ersichtlich, kann vorgesehen sein, dass das innere Ringelement 12 bezüglich dessen axialer Erstreckung geteilt ausgeführt ist um den Zusammenbau der Rotorlagerung 8 zu erleichtern.

In einem nicht dargestellten Ausführungsbeispiel ist es natürlich auch denkbar, dass das innere Ringelement 12 nicht wie im in Fig. 2 dargestellten Ausführungsbeispiel eine Nut bildet, sondern die V-Förmige Anordnung umgekehrt ausgebildet ist, sodass am inneren Ringelement 12 ein V-Förmiger Vorsprung ausgebildet ist. In diesem Fall kann zum leichteren Zusammenbau vorgesehen sein, dass das äußeren Ringelement 13 in dessen axialer Erstreckung geteilt ausgeführt ist.

Wie aus Fig. 2 weiters ersichtlich, kann vorgesehen sein, dass ein Schmierölsumpf 20 ausgebildet ist, welcher zur Aufnahme von Schmieröl 21 dient. Im Betriebszustand kann der Schmierölsumpf 20 bis zu einem Schmierölniveau 22 mit Schmieröl 21 befüllt sein. Das Schmierölniveau 22 ist hierbei so gewählt, dass die Gleitflächen 19 zumindest abschnittsweise unterhalb des Schmierölniveaus 22 liegen und somit in das im Schmierölsumpf 20 befindliche Schmieröl 21 eintauchen.

Zum Wechseln der Gleitlagerelemente 14, 15 kann vorgesehen sein, dass das im Schmierölsumpf 20 befindliche Schmieröl 21 abgelassen wird.

Insbesondere kann vorgesehen sein, dass die Gleitlagerelemente 14, 15 um eine Rotorachse 23 herum angeordnet sind.

Fig. 3 zeigt eine Schnittansicht gemäß der Schnittlinie III - III aus Fig. 3.

Wie aus Fig. 3 ersichtlich, ist vorgesehen, dass das Gleitlagerelement 14, 15 mehrere Gleitlagerpads 24 aufweist, welche über den Umfang verteilt angeordnet sind. Die einzelnen Gleitlagerpads 24 können mittels der Befestigungsmittel 18 mit dem inneren Ringelement 12 gekoppelt bzw. an diesem befestigt sein. Insbesondere kann vorgesehen sein, dass die einzelnen Gleitlagerpads 24 mittels der Befestigungsmittel 18 unabhängig voneinander vom inneren Ringelement 12 lösbar sind. Dadurch können die einzelnen Gleitlagerpads 24 einzeln und unabhängig voneinander aus deren Betriebsposition entfernt bzw. ausgetauscht werden.

Wie aus Fig. 2 weiters ersichtlich, kann vorgesehen sein, dass im Gondelgehäuse 4 eine Gleitlagerpadwechselöffnung 25 ausgebildet ist, durch welche die einzelnen Gleitlagerpads 24 aus dem Gondelgehäuse 4 herausgenommen werden können, ohne dass das Gondelgehäuse 4 dabei demontiert werden muss. Natürlich kann auch vorgesehen sein, dass im Gondelgehäuse 4 mehrere der Gleitlagerpadwechselöffnungen 25 vorgesehen sind.

In einem weiteren Ausführungsbeispiel kann auch vorgesehen sein, dass sich die Gleitlagerpadwechselöffnungen 25 ebenfalls in der Rotornabe 6 befinden.

Die Gleitlagerpadwechselöffnungen 25 können mit einem Deckel 26 verschlossen werden, welcher zum Wechseln der einzelnen Gleitlagerpads 24 vom Gondelgehäuse 4 abgenommen werden kann.

Wie aus Fig. 2 weiters ersichtlich, kann vorgesehen sein, dass eine der Gleitlagerpadwechselöffnungen 25 im Bereich einer obersten Position 27 des zweiten Gleitlagerelementes 15 angeordnet ist und dass eine weitere der Gleitlagerpadwechselöffnungen 25 an einer untersten Position 28 des ersten Gleitlagerelementes 14 angeordnet ist. Somit kann vorgesehen sein, dass die einzelnen Gleitlagerpads 24 des zweiten Gleitlagerelements 15 an der obersten Position 27 des zweiten Gleitlagerelements 15 gewechselt werden. Weiters kann vorgesehen sein, dass die Gleitlagerpads 24 des ersten Gleitlagerelementes 14 an der untersten Position 28 des ersten Gleitlagerelementes 14 gewechselt werden.

Weiters kann vorgesehen sein, dass eine Aufnahmevorrichtung 29 ausgebildet ist, mittels welcher die Rotornabe 6 am Gondelgehäuse 4 befestigt werden kann, um zum Wechseln der Gleitlagerpads 24 die einzelnen Gleitlagerelemente 14, 15 entlasten zu können.

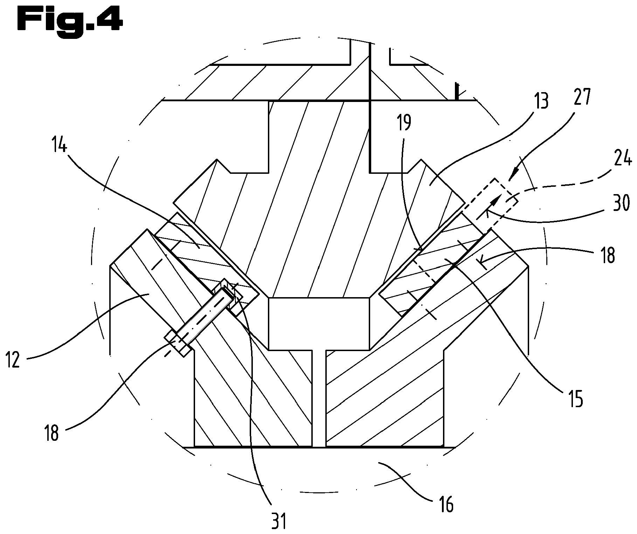

Fig. 4 zeigt eine Detailansicht des Details x aus Fig. 2.

Ein Wechselvorgang zum Wechseln der einzelnen Gleitlagerpads 24 wird unter Zusammenschau der Fig. 2 bis 4 beschrieben.

In einem ersten Verfahrensschritt kann vorgesehen sein, dass gegebenenfalls in einem Schmierölsumpf 20 befindliches Schmieröl 21 aus diesem abgelassen wird. Anschließend können die Deckel 26 vom Gondelgehäuse 4 abgenommen werden, um die Gleitlagerpadwechselöffnungen 25 freizugeben. Dadurch kann erreicht werden, dass die einzelnen Gleitlagerpads 24 durch die Gleitlagerpadwechselöffnung 25 aus dem inneren des Gondelgehäuses 4 herausgenommen werden können und durch neue Gleitlagerpads 24 ersetzt werden können.

In einem weiteren Verfahrensschritt kann vorgesehen sein, dass der Rotor 6 so zum Gondelgehäuse 4 verdreht wird, dass sich ein erstes der zu wechselnden Gleitlagerpads 24 des zweiten Gleitlagerelementes 15 in einer obersten Position 27 befindet. Durch das auf die Rotornabe 6 wirkende Kippmoment 11 ist jenes Gleitlagerpad 24 des zweiten Gleitlagerelementes 15, welches sich in der obersten Position 27 befindet, unbelastet und daher nicht zwischen dem inneren Ringelement 12 und dem äußeren Ringelement 13 geklemmt. Insbesondere kann vorgesehen sein, dass die Gleitfläche 19 des sich in der obersten Position 27 befindlichen Gleitlagerpads 24 des zweiten Gleitlagerelements 15 das äußere Ringelement 13 nicht kontaktiert.

In einem weiteren Verfahrensschritt können jene Befestigungsmittel 18, welche dieses Gleitlagerpad 24 am inneren Ringelement 12 befestigen, gelöst werden. sodass das Gleitlagerpad 24 lose zwischen dem inneren Ringelement 12 und dem äußeren Ringelement 13 aufgenommen ist und in einem anschließenden Verfahrensschritt in Wechselrichtung 30 aus seiner Position herausgezogen werden kann. Hierbei kann das Gleitlagerpad 24 durch die Gleitlagerpadwechselöffnung 25 aus dem inneren des Gondelgehäuses 4 herausgenommen werden und anschließend entsprechend entsorgt bzw. wiederaufbereitet werden.

In einem darauf folgenden Verfahrensschritt kann ein neues und unverschlissenes Gleitlagerpad 24 an die Position des entfernten Gleitlagerpads 24 eingesetzt werden und anschließend mittels Befestigungsmittel 18 am inneren Ringelement 12 befestigt werden. Anschließend kann der Rotor 6 mitsamt dem inneren Ringelement 12 um die Rotorachse 23 verdreht werden, sodass ein weiteres der Gleitlagerpads 24 des zweiten Gleitlagerelements 15 in die oberste Position 27 gelangt.

Anschließend kann analog zum zuvor beschriebenen Verfahren dieses Gleitlagerpad 24 gegen ein neues Gleitlagerpad 24 ausgetauscht werden.

Anschließend kann der Rotor 6 weitergedreht werden, um ein weiteres Gleitlagerpad 24 austauschen zu können. Diese Verfahrensschritte können wiederholt werden, bis alle der Gleitlagerpads 24 des zweiten Gleitlagerelementes 15 getauscht sind.

Analog dazu können die einzelnen Gleitlagerpads 24 des ersten Gleitlagerelementes 14 in dessen unterster Position 28 getauscht werden.

Zum Tausch der einzelnen Gleitlagerpads 24 kann vorgesehen sein, dass in einem ersten Verfahrensbeispiel alle Gleitlagerpads 24 des ersten Gleitlagerelements 14 getauscht werden und anschließend alle Gleitlagerpads 24 des zweiten Gleitlagerelementes 15 getauscht werden. Natürlich ist es auch denkbar, dass in einem ersten Verfahrensschritt alle Gleitlagerpads 24 des zweiten Gleitlagerelementes 15 getauscht werden und anschließend alle Gleitlagerpads 24 des ersten Gleitlagerelementes 14 getauscht werden. In wieder einem anderen Verfahrensbeispiel ist es auch möglich, dass die Gleitlagerpads 24 des ersten Gleitlagerelementes 14 und die Gleitlagerpads 24 des zweiten Gleitlagerelementes 15 abwechselnd ausgetauscht werden, um die zum Tauschvorgang notwendige Rotation der Rotornabe 6 möglichst gering zu halten.

Der Wechsel der einzelnen Gleitlagerpads 24 kann unter Zuhilfenahme der Aufnahmevorrichtung 29 erfolgen.

Wie aus Fig. 4 weiters ersichtlich, kann vorgesehen sein, dass in den einzelnen Gleitlagerpads 24 Befestigungsinserts 31, insbesondere Gewindeinserts, aufgenommen sind.

Bei einem unterschiedlichen Aufbau der Rotorlagerung 8 bzw. der Gondel 2 ist es natürlich auch denkbar, dass die einzelnen Gleitlagerpads 24 durch ein unterschiedliches Verfahren bzw. in einer unterschiedlichen Abfolge ausgewechselt werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Windkraftanlage | 31 | Befestigungsinsert |
| 2 | Gondel | | |
| 3 | Turm | | |
| 4 | Gondelgehäuse | | |
| 5 | Rotor | | |
| 6 | Rotornabe | | |
| 7 | Rotorblatt | | |
| 8 | Rotorlagerung | | |
| 9 | Radialkraft | | |
| 10 | Axialkraft | | |
| 11 | Kippmoment | | |
| 12 | inneres Ringelement | | |
| 13 | äußeres Ringelement | | |
| 14 | erstes Gleitlagerelement | | |
| 15 | zweites Gleitlagerelement | | |
| 16 | Rotorwelle | | |
| 17 | Winkel | | |
| 18 | Befestigungsmittel | | |
| 19 | Gleitfläche | | |
| 20 | Schmierölsumpf | | |
| 21 | Schmieröl | | |
| 22 | Schmierölniveau | | |
| 23 | Rotorachse | | |
| 24 | Gleitlagerpad | | |
| 25 | Gleitlagerpadwechselöffnung | | |
| 26 | Deckel | | |
| 27 | oberste Position | | |
| 28 | unterste Position | | |
| 29 | Aufnahmevorrichtung | | |
| 30 | Wechselrichtung | | |

## Patentansprüche

1. Verfahren zum Wechseln eines Gleitlagerelementes (14, 15) einer Rotorlagerung (8) einer Windkraftanlage (1), wobei die Rotorlagerung (8) ein inneres Ringelement (12) und ein äußeres Ringelement (13) umfasst, zwischen welchen das Gleitlagerelement (14, 15) angeordnet ist, wobei das innere Ringelement (12) und das äußere Ringelement (13) relativ zueinander verdrehbar sind, wobei eine Rotornabe (6) am inneren Ringelement (12) oder am äußeren Ringelement (13) befestigt ist, wobei das Gleitlagerelement (14, 15) mehrere einzelne Gleitlagerpads (24) umfasst, welche jeweils mittels zumindest einem Befestigungsmittel (18) lösbar am inneren Ringelement (12) oder äußeren Ringelement (13) der Rotorlagerung (8) befestigt sind, wobei beim Wechseln des Gleitlagerelementes (14, 15) die einzelnen Gleitlagerpads (24) nacheinander entfernt und durch neue Gleitlagerpads (24) ersetzt werden, wobei während dem Wechseln der einzelnen Gleitlagerpads (24) des Gleitlagerelementes (14, 15) das innere Ringelement (12) und das äußere Ringelement (13) nicht demontiert werden, wobei im Zuge des Wechselvorganges alle der einzelnen Gleitlagerpads (24) gewechselt werden, wobei zum Wechseln der einzelnen Gleitlagerpads (24) ein jeweils zu wechselndes Gleitlagerpad (24) in eine Gleitlagerpadwechselstellung verbracht wird, in der es nicht belastet ist, **dadurch gekennzeichnet, dass**
sowohl das innere Ringelement (12) als auch das äußere Ringelement (13) V-förmig ausgebildet sind und zwischen den beiden Ringelementen (12, 13) axial zueinander beabstandet ein erstes Gleitlagerelement (14) und ein zweites Gleitlagerelement (15) mit jeweils mehreren einzelnen Gleitlagerpads (24) angeordnet sind, wobei die beiden Gleitlagerelemente (14, 15) im Querschnitt gesehen in einem Winkel (17) zueinander angeordnet sind, wobei aufgrund eines Kippmomentes (11), das auf die Rotornabe (6) wirkt, eines der beiden Gleitlagerelemente (14, 15) an dessen oberster Position (27) und das zweite der beiden Gleitlagerelemente (14, 15) an dessen unterster Position (28) nicht belastet ist, wodurch sich die Gleitlagerpadwechselstellungen ergeben.

2. Verfahren nach Anspruch 1, **dadurch gekennzeichnet, dass** die Rotornabe (6) am inneren Ringelement (12) befestigt ist und dass die Gleitlagerpads (24) der Gleitlagerelemente (14, 15) am inneren Ringelement (12) befestigt sind und dass das von der Rotornabe (6) weiter distanzierte erste Gleitlagerelement (14) an dessen unterster Position (28) nicht belastet ist und dass das der Rotornabe (6) näher liegende zweite Gleitlagerelement (15) an dessen oberster Position (27) nicht belastet ist und dass durch Verdrehung der Rotornabe (6) die einzelnen Gleitlagerpads (24) der Gleitlagerelemente (14, 15) in die Gleitlagerpadwechselstellung verbracht werden.

3. Verfahren nach einem der vorhergehenden Ansprüche, **dadurch gekennzeichnet, dass** zu jedem Zeitpunkt beim Wechseln des Gleitlagerelementes (14) zumindest eines der Gleitlagerpads (24) in der Rotorlagerung (8) verbleibt.

4. Verfahren nach einem der vorhergehenden Ansprüche, **dadurch gekennzeichnet, dass** das Verfahren folgende Verfahrensschritte umfasst:
- Drehen der Rotornabe (6) relativ zu einem Gondelgehäuse (4) der Gondel (2), bis eines der Gleitlagerpads (24) an eine Gleitlagerpadwechselstellung gelangt, an der es nicht belastet ist;
- Entfernen jenes Gleitlagerpads (24), welches sich an der Gleitlagerpadwechselstellung befindet und Einsetzen eines neuen Gleitlagerpads (24) anstatt des entfernten Gleitlagerpads (24);
- Drehen der Rotornabe (6) relativ zu dem Gondelgehäuse (4) der Gondel (2), bis ein weiteres der Gleitlagerpads (24) an die Gleitlagerpadwechselstellung gelangt;
- Entfernen jenes Gleitlagerpads (24), welches sich an der Gleitlagerpadwechselstellung befindet und Einsetzen eines neuen Gleitlagerpads (24) anstatt des entfernten Gleitlagerpads (24);
- Durchführen der obigen Verfahrensschritte, bis alle der alten Gleitlagerpads (24) durch neue Gleitlagerpads (24) ersetzt sind.

5. Verfahren nach einem der vorhergehenden Ansprüche, **dadurch gekennzeichnet, dass** die Rotornabe (6) mittels einer Aufnahmevorrichtung (29) aufgenommen wird und mittels der Aufnahmevorrichtung (29) eine derartige Kraft auf die Rotornabe (6) ausgeübt wird, dass jeweils das zu wechselnde Gleitlagerpad (24) entlastet wird.

6. Verfahren nach einem der vorhergehenden Ansprüche, **dadurch gekennzeichnet, dass** die Gleitlagerpads (24) beim Wechseln in einer Wechselrichtung (30) parallel zu ihrer Gleitfläche (19) bewegt werden.

## Claims

1. A method for changing a sliding bearing element (14, 15) of a rotor bearing (8) of a wind turbine (1), wherein the rotor bearing (8) comprises an inner ring element (12) and an outer ring element (13), between which the sliding bearing element (14, 15) is arranged, wherein the inner ring element (12) and the outer ring element (13) are rotatable relative to each other, wherein a rotor hub (6) is fastened to the inner ring element (12) or to the outer ring element (13), wherein the sliding bearing element (14, 15) comprises multiple individual sliding bearing pads (24), each of which are releasably fastened to the inner ring element (12) or outer ring element (13) of the rotor bearing (8) by means of at least one fastening means (18), wherein during the changing of the sliding bearing element (14, 15), the individual sliding bearing pads (24) are removed one after the other and replaced by new sliding bearing pads (24), wherein during the changing of the individual sliding bearing pads (24) of the sliding bearing element (14, 15), the inner ring element (12) and the outer ring element (13) are not disassembled, wherein in the course of the changing operation, all of the individual sliding bearing pads (24) are changed, wherein for changing the individual sliding bearing pads (24), in each case, a sliding bearing pad (24) to be changed is moved into a sliding bearing pad changing position, in which it is not loaded,
**characterized in that**
both the inner ring element (12) and the outer ring element (13) are configured to be V-shaped, and a first sliding bearing element (14) and a second sliding bearing element (15), each having multiple individual sliding bearing pads (24), are arranged between the two ring elements (12, 13) so as to be axially spaced apart from each other, wherein the two sliding bearing elements (14, 15) are arranged at an angle (17) to one another when viewed in the cross-section, wherein due to a tilting torque (11) acting on the rotor hub (6), one of the two sliding bearing elements (14, 15) is not loaded at its topmost position (27) and the second of the two sliding bearing elements (14, 15) is not loaded at its bottommost position (28), which results in the sliding bearing pad changing positions.

2. The method according to claim 1, **characterized in that** the rotor hub (6) is fastened to the inner ring element (12) and that the sliding bearing pads (24) of the sliding bearing elements (14, 15) are fastened to the inner ring element (12) and that the first sliding bearing element (14), which is farther away from the rotor hub (6), is not loaded at its bottommost position (28) and that the second sliding bearing element (15), which is closer to the rotor hub (6), is not loaded at its topmost position (27) and that by rotating the rotor hub (6), the individual sliding bearing pads (24) of the sliding bearing elements (14, 15) can be moved into the sliding bearing pad changing position.

3. The method according to one of the preceding claims, **characterized in that** at any point in time during the changing of the sliding bearing element (14), at least one of the sliding bearing pads (24) remains in the rotor bearing (8).

4. The method according to one of the preceding claims, **characterized in that** the method comprises the following method steps:
- rotating the rotor hub (6) relative to a nacelle housing (4) of the nacelle (2) until one of the sliding bearing pads (24) arrives at a sliding bearing pad changing position at which it is not loaded;
- removing that sliding bearing pad (24) which is situated at the sliding bearing pad changing position and inserting a new sliding bearing pad (24) in place of the removed sliding bearing pad (24);
- rotating the rotor hub (6) relative to the nacelle housing (4) of the nacelle (2) until a further one of the sliding bearing pads (24) arrives the sliding bearing pad changing position;
- removing that sliding bearing pad (24) which is situated at the sliding bearing pad changing position and inserting a new sliding bearing pad (24) in place of the removed sliding bearing pad (24);
- performing the above method steps until all of the old sliding bearing pads (24) are replaced by new sliding bearing pads (24).

5. The method according to one of the preceding claims, **characterized in that** the rotor hub (6) is received by means of a receiving device (29) and the rotor hub (6) is subjected to such a force by means of the receiving device (29) that, in each case, the sliding bearing pad (24) to be changed is relieved.

6. The method according to one of the preceding claims, **characterized in that** while being changed, the sliding bearing pads (24) are moved in a changing direction (30) in parallel to their sliding surface (19).

## Revendications

1. Procédé pour le changement d'un élément de palier lisse (14, 15) d'un palier de rotor (8) d'une éolienne (1), dans lequel le palier de rotor (8) comprend un élément annulaire interne (12) et un élément annulaire externe (13), entre lesquels l'élément de palier lisse (14, 15) est disposé, dans lequel l'élément annulaire interne (12) et l'élément annulaire externe (13) peuvent tourner l'un par rapport à l'autre, dans lequel un moyeu de rotor (6) est fixé à l'élément annulaire interne (12) ou à l'élément annulaire externe (13), dans lequel l'élément de palier lisse (14, 15) comprend plusieurs patins de palier lisse (24) individuels qui sont fixés chacun à l'aide d'un moyen de fixation (18) de manière amovible à l'élément annulaire interne (12) ou à l'élément annulaire externe (13) du palier de rotor (8), dans lequel, lors du changement de l'élément de palier lisse (14, 15), les différents patins de palier lisse (24) sont retirés successivement et remplacés par de nouveaux patins de palier lisse (24), dans lequel, pendant le changement des différents patins de palier lisse (24) de l'élément de palier lisse (14, 15), l'élément annulaire interne (12) et l'élément annulaire externe (13) ne sont pas démontés, dans lequel, au cours du processus de changement, tous les patins de palier lisse (24) sont changés, dans lequel, pour le changement des différents patins de palier lisse (24), chaque patin de palier lisse (24) à changer est mis dans une position de changeant de patin de palier lisse dans laquelle il n'est pas sollicité,
**caractérisé en ce que**
aussi bien l'élément annulaire interne (12) que l'élément annulaire externe (13) présentent une forme de V et, entre les deux éléments annulaires (12, 13), sont disposés, de manière distante axialement entre eux, un premier élément de palier lisse (14) et un deuxième élément de palier lisse (15), avec chacun plusieurs patins de palier lisse (24) individuels, dans lequel les deux éléments de palier lisse (14, 15) sont disposés, vs en coupe transversale, avec un angle (17) l'un par rapport à l'autre, dans lequel, du fait d'un couple de basculement (11), qui agit sur le moyeu de rotor (6), un des deux éléments de palier lisse (14, 15), dans sa position la plus haute (27), et le deuxième des deux éléments de palier lisse (14, 15), dans sa position la plus basse (28), n'est pas sollicité, ce qui permet d'obtenir les positions de changement de patins de palier lisse.

2. Procédé selon la revendication 1, **caractérisé en ce que** le moyeu de rotor (6) est fixé à l'élément annulaire interne (12) et **en ce que** les patins de palier lisse (24) des éléments de palier lisse (14, 15) sont fixés à l'élément annulaire interne (12) et **en ce que** le premier élément de palier lisse (14), le plus éloigné du moyeu de rotor (6), dans sa position la plus basse (28), n'est pas sollicité et **en ce que** le deuxième élément de palier (15) le plus proche du moyeu de rotor (6), dans sa position la plus haute (27), n'est pas sollicité et ce que, par la rotation du moyeu de rotor (6), les différents patins de palier lisse (24) des éléments de palier lisse (14, 15) sont mis dans la position de changement de patins de palier lisse.

3. Procédé selon l'une des revendications précédentes, **caractérisé en ce que**, à tout moment lors du changement de l'élément de palier lisse (14), au moins un des patins de palier lisse (24) reste dans le palier de rotor (8).

4. Procédé selon l'une des revendications précédentes, **caractérisé en ce que** le procédé comprend les étapes suivantes :
- rotation du moyeu de rotor (6) par rapport à un carter de nacelle (4) de la nacelle (2), jusqu'à ce qu'un des patins de palier lisse (24) arrive à une position de changement de patin de palier lisse, dans laquelle il n'est pas sollicité ;
- retrait du patin de palier lisse (24) qui se trouve dans la position de changement de palier lisse et insertion du nouveau patin de palier lisse (24) à la place du patin de palier lisse (24) retiré ;
- rotation du moyeu de rotor (6) par rapport au carter de nacelle (4) de la nacelle (2), jusqu'à ce qu'un autre patin de palier lisse (24) arrive à la position de changement de patin de palier lisse ;
- retrait du patin de palier lisse (24) qui se trouve dans la position de changement de palier lisse et insertion du nouveau patin de palier lisse (24) à la place du patin de palier lisse (24) retiré ;
- exécution des étapes précédentes jusqu'à ce que tous les anciens patins de palier lisse (24) soient remplacés par de nouveaux patins de palier lisse (24).

5. Procédé selon l'une des revendications précédentes, **caractérisé en ce que** le moyeu de rotor (6) est logé à l'aide d'un dispositif de logement (29) et, au moyen du dispositif de logement (29), une force est exercée sur le moyeu de rotor (6) de sorte que le patin de palier lisse (24) à changer est déchargé.

6. Procédé selon l'une des revendications précédentes, **caractérisé en ce que** les patins de palier lisse (24) sont déplacés, lors du changement, dans une direction de changement (30) parallèle à leur surface de glissement (19).
